**Europäisches Patentamt**

**European Patent Office**

**Office européen des brevets**

(19)

(11) Veröffentlichungsnummer: **0 076 414**
**B1**

(12) **EUROPÄISCHE PATENTSCHRIFT**

(45) Veröffentlichungstag der Patentschrift:
11.09.85

(21) Anmeldenummer: 82108620.4

(22) Anmeldetag: 18.09.82

(51) Int. Cl.⁴: **C 08 J 5/06,** C 08 L 63/00,
C 08 L 67/06, C 08 L 75/04,
C 08 L 79/08, D 06 M 11/00,
D 01 F 6/60, D 06 Q 1/04,
D 06 N 3/00

(54) Duroplastische Verbundwerkstoffe mit metallisierten Aramidfäden.

(30) Priorität: 02.10.81 DE 3139313

(43) Veröffentlichungstag der Anmeldung:
13.04.83 Patentblatt 83/15

(45) Bekanntmachung des Hinweises auf die Patenterteilung:
11.09.85 Patentblatt 85/37

(84) Benannte Vertragsstaaten:
DE FR GB IT

(56) Entgegenhaltungen:
EP - A - 0 057 908
DE - A - 2 635 114
DE - A - 2 820 502

(73) Patentinhaber: BAYER AG, Konzernverwaltung RP
Patentabteilung, D-5090 Leverkusen 1 Bayerwerk (DE)

(72) Erfinder: Ebneth, Harold, Dr.,
Berta-von-Suttner-Strasse 61, D-5090 Leverkusen 1 (DE)
Erfinder: Preis, Lothar, Dr., August-Kierspel-Strasse 42,
D-5060 Bergisch-Gladbach 2 (DE)
Erfinder: Giesecke, Henning, Dr., Duesseldorfer
Strasse 49, D-5000 Köln 80 (DE)
Erfinder: Wolf, Gerhard, Dieter, Dr.,
Wilhelm-Busch-Strasse 29, D-4047 Dormagen 5 (DE)

## Beschreibung

Die Erfindung betrifft die Verwendung metallisierter Aramidfäden als Verstärkungsmaterialien.

Es sind eine Reihe von Verfahren bekannt, Verstärkungsfasern zur Herstellung von Faserverbundwerkstoffen chemisch so zu modifizieren, daß eine Verbesserung der Haftung zwischen Faser und Matrix-Materialien erreicht wird. Die Haftung der Komponenten untereinander ist wesentlich für viele Gebrauchseigenschaften von Verbundwerkstoffen, z. B. in der Flugzeugindustrie.

Modifizierungsmethoden, die sich z. B. bei Glasfasern als wirkungsvoll erweisen, sind bei Aramidfäden ungeeignet. Der vorliegenden Anmeldung lag daher die Aufgabe zugrunde, eine Methode zur Modifizierung von Aramidfäden zu finden, die es erlaubt, die Verstärkungswirkung dieser Aramidfasern im Verbundwerkstoff voll zu nutzen.

Es wurde überraschenderweise gefunden, daß man Aramidfäden mit vorzüglichen Hafteigenschaften gegenüber duroplastischen Kunststoffen erhält, wenn man die Aramidfasern vorher stromlos metallisiert. Aus solchen metallisierten Aramidfäden und duroplastischen Kunststoffen hergestellte Verbundwerkstoffe weisen erhöhte Zug- und Biegefestigkeit auf.

Unter Aramidfäden werden im Sinne der Erfindung auch deren Folgeprodukte, wie Fasern, Garne und textile Flächengebilde verstanden.

Textile Flächengebilde sind beispielsweise Gewebe, Gewirke, Gestricke, Vliese oder Nadelfilze.

Die Aramidfasern, die hochtemperaturstabile organische Fasern mit einem hohen E-Modul sind, sind beispielsweise in Ullmanns Enzyklopädie der Technischen Chemie, 4. Auflage, Band 11, Seiten 339—353, beschrieben.

Metallisierte Aramidfasern sind aus DE-A-2 820 502 bekannt.

Gegenstand der Erfindung sind daher Verbundwerkstoffe, die stromlos metallisierte Aramidfäden als Verstärkungsmaterial in duroplastischen Kunststoffen (z. B. Epoxid-Harze, ungesättigte Polyester-Harze, Polyurethan-Harze oder Polyimidharze) enthalten. Als Metalle kommen vorzugsweise Nickel, Cobalt, Kupfer, Gold oder Silber bzw. deren Legierungen untereinander oder mit Eisen in Frage.

Die Dicke der Metallschicht auf dem Monofil liegt zwischen 0,05 und 10 µm, vorzugsweise zwischen 0,1 und 1 µm.

Vergleichende Untersuchungen zwischen vernickelten und nicht vernickelten Aramidfasern eingebettet in Epoxid-Harzen oder ungesättigten Polyesterharzen zeigen, daß die Zugfestigkeit, die Biegefestigkeit und der E-Modul des Verbundwerkstoffes durch die Metallisierung erhöht wird. Für die mit metallisierten Aramidfasern verstärkten Verbundwerkstoffe ist es weiterhin von Vorteil, daß durch die Metallisierung elektrisch leitfähige Substrate entstehen. Dadurch kann je nach Metallschichtdicke ein Schutz vor elektrostatischer Aufladung bis hin zum Blitzschutz erreicht werden.

Bei Verwendung von Metallen, wie beispielsweise Nickel, Cobalt, Eisen oder deren Legierungen untereinander, erhält man eine Abschirmung von elektromagnetischer Strahlung.

Die Metallisierung kann sowohl an den Fäden, Fasern, Garnen, als auch an den daraus hergestellten textilen Flächengebilden durchgeführt werden.


## Beispiel 1

Ein Gewebe aus Poly-p-phenylenterephthalamid-Spinnfasern mit einem Flächengewicht von 62 g/m² wurde 30 Sekunden in einer Lösung von 0,25 g/l einer metallorganischen Verbindung aus Butadien und Palladiumchlorid (vergleiche DE-A-3 025 307) aktiviert und anschließend 30 Minuten lang bei Raumtemperatur in einem Nickelbad behandelt. Das Nickelbad enthielt 30 g/l Nickelchlorid · 6 H₂O, 10 g/l Citronensäure und 3 g/l Dimethylaminboran. Der pH-Wert des Bades betrug 8,5.

Das Gewebe hatte eine Nickelmenge von 25 g/m² aufgenommen und wies einen Widerstand von R = 0,3 Ω/m² auf.

Entsprechend wurde ein vercobaltetes Gewebe mit folgenden Werten hergestellt: Cobaltmenge 14 g/m²; Widerstand 3,5 Ω/m².

Proben aus metallisiertem Gewebe und aus gleichem nicht metallisiertem Gewebe wurden wie folgt in Epoxidharze eingebettet. Das Gewebe wurde in Kettrichtung in 30 mm breite Streifen geschnitten, die Streifen einzeln mit einem kalthärtenden Epoxidharz auf Basis Bisphenol A (Epoxidäquivalentgewicht ca. 200) und Pentaethylenhexamin imprägniert und soviele Lagen in eine Prüfkörperform 200 × 30 × 2 mm eingelegt, bis eine Schichtdicke von 2 mm erreicht war. Der Fasergehalt lag bei 41,6 Gew.-%. Nach dem Aushärten wurden die folgenden physikalischen Eigenschaften ermittelt:

| Material | Zugfestigkeit (MPa) | Bruchdehnung (%) |
|---|---|---|
| Gewebe, unmetallisiert | 290 | 1,4 ± 0,1 |
| Gewebe, vernickelt | 331 | 2,0 ± 0,05 |

| Material | Biegefestigkeit (MPa) | E-Modul (MPa) |
|---|---|---|
| Gewebe, unmetallisiert | 221 | 17 429 |
| Gewebe, vernickelt | 325 | 20 417 |
| Gewebe, vercobaltet | 248 | 19 266 |

Die Gegenüberstellung der Meßergebnisse zeigt eine deutliche Verbesserung von Biege- und Zugfestigkeit E-Modul und Bruchdehnung der metallisierten Proben.

Beispiel 2

An Prüfkörpern analog Beispiel 1, jedoch mit einem ungesättigten Polyesterharz auf Basis Isophthalsäure (Fasergehalt 42,1 Gew.-%) wurden folgende Werte gemessen:

| Material | Biegefestigkeit (MPa) | E-Modul (MPa) |
|---|---|---|
| Gewebe, unmetallisiert | 241 | 15 044 |
| Gewebe, vernickelt | 292 | 17 644 |

**Patentansprüche**

1. Verbundwerkstoffe enthaltend stromlos metallisierte Aramidfäden in einer duroplastischen Kunststoffmatrix.
2. Verbundwerkstoffe gemäß Anspruch 1, dadurch gekennzeichnet, daß die Aramidfäden mit Nikkel, Cobalt, Kupfer, Gold, Silber, deren Legierungen untereinander oder mit Eisen metallisiert sind.
3. Verbundwerkstoffe gemäß Anspruch 1, dadurch gekennzeichnet, daß die Metallschichtdicke auf dem Monofil 0,05 bis 10 µm beträgt.
4. Verbundwerkstoffe gemäß Anspruch 1, dadurch gekennzeichnet, daß als duroplastische Kunststoffe Epoxid-Harze, ungesättigte Polyesterharze, Polyurethanharze oder Polyimidharze verwendet werden.

**Claims**

1. Composites containing currentlessly metallised aramide fibres in a duroplastic plastic matrix.
2. Composites according to Claim 1, characterised in that the aramide fibres are metallised with nickel, cobalt, copper, gold, silver, alloys thereof with each other, or with iron.
3. Composites according to Claim 1, characterised in that the thickness of the metal layer on the monofilament is 0.05 to 10 µm.
4. Composites according to Claim 1, characterised in that epoxy resins, unsaturated polyester resins, polyurethane resins or polyimide resins are used as the duroplastic plastics.

**0 076 414**

**Revendications**

1. Matériaux composites contenant des filaments d'aramides métallisés sans courant électrique dans une matrice de matière thermodurcissable.

2. Matériaux composites selon la revendication 1, caractérisés en ce que les filaments d'aramides sont métallisés par le nickel, le cobalt, le cuivre, l'or, l'argent, leurs alliages entre eux ou avec le fer.

3. Matériaux composites selon la revendication 1, caractérisés en ce que l'épaisseur de la couche métallique sur le monofilament est de 0,05 à 10 $\mu$m.

4. Matériaux composites selon la revendication 1, caractérisés en ce que l'on utilise comme matières thermodurcissables des résines époxydiques, des résines de polyesters insaturées, des résines de polyuréthannes ou des résines de polyimides.

4